# FASCICULE DE BREVET EUROPEEN

(11) **EP 4 069 956 B1**
(45) Date de publication et mention de la délivrance du brevet: **21.02.2024**
(21) Numéro de dépôt: 20861960.1
(22) Date de dépôt: 12.11.2020
(51) Int. Cl.: F01P 3/12, F01P 3/20

(54) **CIRCUIT CALOPORTEUR POUR GROUPE MOTOPROPUSLEUR**
WÄRMEÜBERTRAGUNGSKREISLAUF FÜR EINEN ANTRIEBSSTRANG
HEAT TRANSFER CIRCUIT FOR A DRIVETRAIN

(30) Priorité: 06.12.2019 FR 1913907
(43) Date de publication de la demande: 12.10.2022
(73) Titulaire: Stellantis Auto SAS, 78300 Poissy (FR)
(72) Inventeur: MARCAIS, Philippe, 78500 SARTROUVILLE (FR); NOSSIN, Kiwan, 92150 SURESNES (FR)
(86) Numéro de dépôt international: PCT/FR2020/052068
(87) Numéro de publication internationale: WO 2021/111052

(56) Documents cités:
- DE-A1- 10 318 744
- FR-A1- 2 951 778
- FR-A1- 3 070 721
- FR-A1- 3 078 389

## Description

L'invention concerne de manière générale le domaine des groupes motopropulseurs, notamment ceux montés sur un véhicule automobile. Elle concerne plus particulièrement un circuit caloporteur pour groupe motopropulseur permettant un chauffage de l'habitacle d'un véhicule.

Dans le domaine de l'industrie automobile, un groupe motopropulseur est refroidi au moyen d'un circuit de régulation thermique dans lequel circule un fluide caloporteur : la circulation de ce fluide est induite par une pompe à eau qui est entrainée mécaniquement par un moteur thermique (soit par courroie soit par une chaine, soit par pignon...). La vitesse de rotation du moteur thermique limite le débit fourni par la pompe à eau et quand le moteur est à l'arrêt, il n'y a plus de circulation de fluide.

Or, ce fluide caloporteur sert également à chauffer l'habitacle du véhicule : en effet, les calories du fluide caloporteur dans le circuit de régulation thermique sont évacuées vers un aérotherme permettant de fournir un chauffe interne au véhicule.

L'arrivée des moteurs hybrides imposent néanmoins un arrêt fréquent du moteur thermique pour mettre en oeuvre un moteur électrique assurant un mode de fonctionnement du véhicule en mode ZEV (mode zéro émission). A l'origine de l'invention, on a donc cherché une solution technique qui permette de continuer la circulation de fluide caloporteur provenant du moteur thermique vers l'aérotherme pour permettre un chauffage de l'habitacle même en cas d'arrêt du moteur thermique.

On connait du document FR 3 073 255 un circuit de régulation thermique pour groupe motopropulseur qui comporte une électrovanne pilotée, qui permet de manière conditionnelle de diriger le fluide caloporteur en sortie d'un échangeur de boite de vitesse vers un radiateur ou vers l'aérotherme : ainsi, en cas d'arrêt du moteur thermique (en faveur du fonctionnement du moteur électrique), les calories du fluide caloporteur issues de la boite de vitesse sont récupérées pour réaliser un chauffage de l'habitacle. On dépense ainsi de la puissance électrique pour réaliser le chauffage de l'habitacle du véhicule. Par ailleurs, l'électrovanne pilotée permet d'ajuster le débit du fluide caloporteur en aval, de sorte à envoyer toute ou partie de débit issu d'un sous circuit de régulation thermique. FR3070721A1 divulgue un groupe motopropulseur avec une boucle d'aérotherme.

L'invention vise à proposer une alternative à cette solution technique.

Elle propose à cet effet un groupe motopropulseur comportant un moteur thermique, un turbocompresseur de moteur thermique, une pompe de turbocompresseur, un boîtier de sortie d'eau auquel sont notamment reliés le moteur thermique, un radiateur et un aérotherme au moyen d'un circuit caloporteur dans lequel circule un fluide caloporteur, ledit circuit caloporteur comportant :
- un premier segment de circuit caloporteur positionné en sortie dudit moteur thermique sur lequel est monté un turbocompresseur, et
- un second segment de circuit, reliant le boîtier de sortie d'eau audit aérotherme.

Le groupe motopropulseur conforme à l'invention est remarquable en ce que ledit circuit caloporteur comporte un troisième segment de circuit sur lequel est montée la pompe de turbocompresseur, ledit troisième segment présentant une entrée située sur le premier segment en amont du turbocompresseur et une sortie située sur le second segment pour alimenter en fluide caloporteur ledit aérotherme, ledit premier segment étant relié au troisième segment en aval de ladite pompe et un clapet antiretour est prévu sur ledit second segment en amont de ladite sortie du troisième segment.

Ainsi réalisé et alors même que le moteur est arrêté, le groupe motopropulseur de l'invention permet, lorsque l'on active la pompe, d'envoyer le fluide caloporteur provenant du moteur (donc chaud) dans l'aérotherme et donc de chauffer l'habitacle.

Par ailleurs, ce mode de réalisation peut être mise en oeuvre sans modifier le boîtier de sortie d'eau déjà existant, car le troisième segment du circuit caloporteur peut être mis en oeuvre à l'extérieur du boîtier de sortie d'eau. L'invention peut également comporter les caractéristiques suivantes, prises séparément ou en combinaison :
- le fluide caloporteur circulant dans ledit circuit caloporteur comprend un fluide caloporteur chaud et un fluide caloporteur refroidi ; et le boîtier de sortie d'eau comporte une première chambre dans laquelle est collecté le fluide caloporteur chaud et une seconde chambre dans laquelle est collecté le fluide caloporteur refroidi, ladite première chambre présentant une entrée de première chambre pour une admission de fluide caloporteur chaud en provenance du moteur thermique, une première sortie de première chambre à laquelle est relié ledit second segment et une seconde sortie de première chambre reliée à un quatrième segment de circuit caloporteur reliant ladite première chambre audit radiateur, ladite seconde chambre présentant une entrée de seconde chambre reliée à un cinquième segment de circuit reliant ladite seconde chambre audit radiateur et une sortie de seconde chambre reliée à un sixième segment de circuit reliant ladite seconde chambre audit aérotherme et/ou audit moteur thermique ;
- la première sortie de première chambre comporte un logement ménagé pour accueillir ledit clapet antiretour,
- ladite première chambre comporte une seconde entrée de première chambre et une seconde sortie de première chambre, ledit troisième segment de circuit caloporteur traversant au moins partiellement ladite première chambre entre ladite seconde entrée de première chambre et ladite seconde sortie de première chambre, ladite seconde sortie de première chambre étant reliée audit second segment de circuit caloporteur en aval dudit clapet antiretour, ou
- une canalisation externe est rapportée sur ledit boîtier de sortie d'eau pour accueillir au moins partiellement ledit troisième segment.

L'invention concerne également un véhicule comportant un groupe motopropulseur tel que défini ci-avant.

En outre, l'invention concerne un boîtier de sortie d'eau pour groupe motopropulseur tel que défini ci-dessus, ledit boîtier comportant une première chambre apte à collecter un fluide caloporteur chaud et une seconde chambre apte à collecter un fluide caloporteur refroidi, ladite première chambre comportant une entrée de première chambre pour une admission de fluide caloporteur chaud en provenance d'un moteur thermique, une première sortie de première chambre à raccorder à un second segment de circuit caloporteur relié à un aérotherme et une seconde sortie de première chambre à raccorder à un quatrième segment de circuit caloporteur pour relier ladite première chambre à un radiateur, ladite seconde chambre présentant une entrée de seconde chambre à raccorder à un cinquième segment de circuit caloporteur relié à un radiateur et une sortie de seconde chambre à raccorder à un sixième segment de circuit caloporteur relié audit aérotherme et/ou audit moteur thermique, la première sortie de première chambre comportant un logement ménagé pour accueillir un clapet antiretour.

Le boîtier de sortie d'eau conforme à l'invention peut comporter les caractéristiques suivantes, prises séparément ou en combinaison :
- ladite première chambre comporte une seconde entrée de première chambre et une seconde sortie de première chambre, un troisième segment de circuit caloporteur traversant au moins partiellement ladite première chambre entre ladite seconde entrée de première chambre et ladite seconde sortie de première chambre, ladite seconde sortie de première chambre étant reliée audit second segment de circuit caloporteur en aval dudit clapet antiretour, ou
- le boîtier comporte une canalisation externe pour accueillir au moins partiellement ledit troisième segment.

Un avantage de l'invention est d'avoir permis une modification des débits dans le boitier de sortie d'eau. En effet, en supprimant le retour du turbocompresseur dans la seconde chambre (d'un boîtier de sortie d'eau tel qu'on le connait avant l'invention) et en remettant ce circuit sur le circuit aérotherme, cela a réduit le débit de la première chambre allant dans l'aérotherme, ce qui au final permis d'augmenter le débit allant dans le radiateur de 10 L/min à 6 000 tr/min.

Ce gain en débit dans le radiateur permet, suivant les adaptations, de réduire éventuellement la taille du radiateur ou celle du groupe moto ventilateur ou de gagner en masse remorquée.

L'invention permet en outre de gagner en débit de fluide caloporteur circulant en direction du radiateur, permettant un meilleur refroidissement du moteur.

D'autres avantages et caractéristiques de l'invention apparaîtront à l'examen de la description détaillée d'un mode de mise en oeuvre nullement limitatif, et des dessins annexés, sur lesquels :
[Fig. 1] est une vue de dessus et schématique d'un groupe motopropulseur conforme à l'invention, représenté dans une partie de véhicule terrestre illustré également de façon schématique et partielle,
[Fig. 2] est une représentation schématique d'un boîtier de sortie d'eau conforme à l'invention.

Dans la description qui suit, les termes « inférieur », « supérieur », « gauche », « droite » etc... sont utilisés en référence aux dessins pour une plus grande facilité de compréhension. Ils ne doivent pas être compris comme étant des limitations de la portée de l'invention.

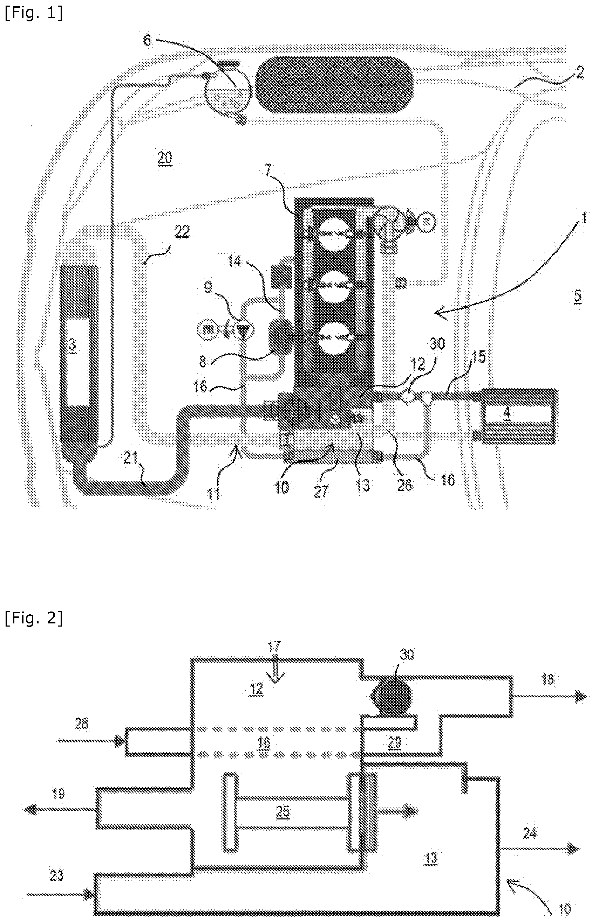

La figure 1 illustre un groupe motopropulseur 1 de façon schématique : la carrosserie 2 de la partie avant d'un véhicule terrestre de type voiture est illustrée partiellement et le groupe motopropulseur 1 est positionné sous le capot 20 avant du véhicule.

La figure 1 illustre également schématiquement un radiateur 3, placé à l'avant du véhicule, un aérotherme 4 placé au voisinage d'un habitacle 5 de véhicule, et un réservoir 6 de fluide caloporteur.

L'aérotherme 4 a pour fonction d'assurer un chauffage de l'habitacle 5 du véhicule.

Le groupe motopropulseur 1 comporte un moteur thermique 7, un turbocompresseur 8 et une pompe 9 de turbocompresseur.

La pompe de turbocompresseur assure le refroidissement du turbocompresseur en cas d'arrêt du moteur thermique.

Il comporte en outre un boîtier de sortie d'eau 10.

Il comporte enfin un circuit caloporteur 11, dans lequel le fluide caloporteur circule et comportant plusieurs segments pour faire circuler le fluide dans les éléments du groupe motopropulseur 1 et dans le radiateur 3 et l'aérotherme 4.

Le fluide caloporteur peut être soit chaud (lorsqu'il circule dans le moteur pour le refroidir, le fluide monte en température) soit refroidi (lorsqu'il circule dans le radiateur, le fluide est refroidi).

Le boîtier de sortie d'eau 10 comporte deux chambres : une première chambre 12 est conçue pour recueillir le fluide caloporteur chaud et le transmettre soit à l'aérotherme 4 pour chauffer l'habitacle soit au radiateur 3 pour le refroidir. Une seconde chambre 13 est conçue pour recueillir le fluide caloporteur refroidi en provenance du radiateur et le réinjecter soit dans le moteur thermique 7(pour le refroidir) soit vers l'aérotherme pour notamment servir à régler la température de l'habitacle.

Le circuit caloporteur 11 comporte plusieurs segments :
Un premier segment 14 de circuit caloporteur récupère le fluide caloporteur chaud en sortie du moteur thermique. Le turbocompresseur 8 est monté sur ce premier segment 14.

Un second segment 15 de circuit caloporteur récupère le fluide caloporteur chaud en sortie du boîtier de sortie d'eau 10, et plus précisément en sortie 18 de la première chambre 12 du boîtier de sortie d'eau, pour le transmettre à l'aérotherme 4. Le second segment 15 relie donc la première chambre du boîtier de sortie d'eau 10 à l'aérotherme 4.

Conformément à l'invention, le circuit caloporteur 11 comporte un troisième segment 16 de circuit sur lequel est montée la pompe 9 du turbocompresseur 8.

Ce troisième segment 16 présente une entrée située sur le premier segment 14, en amont du turbocompresseur 8, et une sortie qui est située sur le second segment : de cette façon, le fluide caloporteur chaud en sortie du moteur thermique peut circuler à la fois dans le premier segment à travers le turbocompresseur et dans le troisième segment 16 directement en direction de l'aérotherme 4 car le troisième segment 16 débouche dans le second segment 15 qui alimente l'aérotherme 4 en fluide caloporteur chaud.

Pour assurer le refroidissement du turbocompresseur en cas d'arrêt du moteur, il est prévu que le premier segment 14 de circuit caloporteur soit relié au troisième segment 16 en aval de la pompe 9. Ainsi, quand le moteur thermique 7 est arrêté, la pompe 9 permet d'envoyer du fluide caloporteur chauf à la fois en direction de l'aérotherme et en direction du turbocompresseur 8.

De plus, afin d'éviter tout retour de fluide chaud vers la sortie de la première chambre 12 du boîtier de sortie d'eau, on prévoit de monter un clapet antiretour 30 entre le boîtier de sortie d'eau et la sortie du troisième segment 16 du circuit caloporteur.

La figure 2 montre en particulier le boîtier de sortie d'eau 10, représenté schématiquement, comportant les première et seconde chambres 12 et 13. La première chambre 12 présente une entrée 17 d'admission de fluide caloporteur chaud en provenance du moteur thermique 7. Cette entrée d'admission sera appelée première entrée 17 de première chambre 12.

La première chambre 12 présente également une sortie 18 de première chambre : le second segment 15 de circuit caloporteur est reliée à cette sortie 18 de première chambre pour acheminer le fluide chaud vers l'aérotherme.

On prévoit d'aménager un logement dans la sortie 18 pour recevoir le clapet antiretour 30.

La première chambre comporte en outre une seconde sortie 19 de première chambre 12 qui permet d'acheminer le fluide caloporteur chaud vers le radiateur 3 via un quatrième segment 21 de circuit caloporteur.

La seconde chambre 13 du boîtier de sortie d'eau 10 est destinée à recevoir le fluide caloporteur refroidi en provenance du radiateur 3. Cette seconde chambre 13 comporte donc une entrée 23 de seconde chambre reliée au radiateur 3 via un cinquième segment 22 de circuit caloporteur (acheminant le fluide refroidi par le radiateur 3 vers le boîtier de sortie d'eau).

La seconde chambre 13 comporte également une sortie 24 de seconde chambre qui évacue le fluide caloporteur refroidi à travers un sixième segment 26 vers le moteur thermique 7.

Comme il est en soi connu, on prévoit des moyens 25 permettant de faire communiquer l'intérieur des première et seconde chambres 12 et 13.

Le troisième segment 16 de circuit caloporteur peut être réalisé de plusieurs façons différentes : en effet, soit on rapporte une canalisation 27 sur un boîtier de sortie d'eau 10 et l'on fait passer le segment 16 dans cette canalisation 27 extérieure au boîtier, soit on ménage un passage à l'intérieur de la première chambre 12 pour y faire passer le troisième segment 16 comme illustré en figure 2.

Dans ce dernier cas, on prévoit que la première chambre 12 comporte une seconde entrée 28 de première chambre et une seconde sortie 29 de première chambre, le troisième segment 16 étant ménagé partiellement entre ladite seconde entrée 28 et ladite seconde sortie 29 de la première chambre.

Dans le cadre de ce mode de réalisation, la seconde sortie 29 de première chambre débouche en aval du clapet antiretour 30 pour être reliée audit second segment 15 de circuit caloporteur.

On comprend de la description qui précède comment l'invention permet d'alimenter en fluide caloporteur chaud l'aérotherme en cas d'arrêt du moteur thermique.

Il devra toutefois être compris que l'invention n'est pas limitée au mode de réalisation spécifiquement décrit ci-avant et qu'elle s'étend à la mise en oeuvre de tout moyen équivalent.

## Revendications

1. Groupe motopropulseur (1) comportant un moteur thermique (7), un turbocompresseur (8) de moteur thermique, une pompe (9) de turbocompresseur, un boîtier de sortie d'eau (10) auquel sont notamment reliés le moteur thermique (7), un radiateur (3) et un aérotherme (4) au moyen d'un circuit caloporteur (11) dans lequel circule un fluide caloporteur, ledit circuit caloporteur (11) comportant :
- un premier segment (14) de circuit caloporteur positionné en sortie dudit moteur thermique (7) sur lequel est monté ledit turbocompresseur (8), et
- un second segment (15) de circuit caloporteur, reliant le boîtier de sortie d'eau (10) audit aérotherme (4),
**caractérisé en ce que** ledit circuit caloporteur (11) comporte un troisième segment (16) sur lequel est montée ladite pompe (9) de turbocompresseur, ledit troisième segment (16) présentant une entrée de troisième segment située sur le premier segment (14) en amont du turbocompresseur (8) et une sortie de troisième segment située sur le second segment (15) pour alimenter en fluide caloporteur ledit aérotherme (4), ledit premier segment (14) étant relié au troisième segment (16) en aval de ladite pompe (9) et un clapet antiretour (30) est prévu sur ledit second segment (15) en amont de ladite sortie du troisième segment (16).

2. Groupe motopropulseur selon la revendication 1, **caractérisé en ce que** le fluide caloporteur circulant dans ledit circuit caloporteur (11) comprend un fluide caloporteur chaud et un fluide caloporteur refroidi ; et **en ce que** le boîtier de sortie d'eau (10) comporte une première chambre (12) dans laquelle est collecté le fluide caloporteur chaud et une seconde chambre (13) dans laquelle est collecté le fluide caloporteur refroidi, ladite première chambre (12) présentant une entrée de première chambre (17) pour une admission de fluide caloporteur chaud en provenance du moteur thermique (7), une première sortie de première chambre (18) à laquelle est relié ledit second segment (15) et une seconde sortie de première chambre (19) à laquelle est relié un quatrième segment (21) de circuit caloporteur reliant ladite première chambre (12) audit radiateur (3), ladite seconde chambre (13) présentant une entrée de seconde chambre (23) à laquelle est relié un cinquième segment (22) de circuit reliant ladite seconde chambre (13) audit radiateur (3) et une sortie de seconde chambre (24) à laquelle est relié un sixième segment (26) de circuit reliant ladite seconde chambre (13) audit aérotherme (4) et/ou audit moteur thermique (7).

3. Groupe motopropulseur selon la revendication 2, **caractérisé en ce que** la première sortie de première chambre (18) comporte un logement ménagé pour accueillir ledit clapet antiretour (30).

4. Groupe motopropulseur selon l'une quelconque des revendications 2 ou 3, **caractérisé en ce que** ladite première chambre (12) comporte une seconde entrée de première chambre (28) et une seconde sortie de première chambre (29), ledit troisième segment (16) de circuit caloporteur traversant au moins partiellement ladite première chambre (12) entre ladite seconde entrée de première chambre (28) et ladite seconde sortie de première chambre (29), ladite seconde sortie de première chambre (29) étant reliée audit second segment (15) de circuit caloporteur en aval dudit clapet antiretour (30).

5. Groupe motopropulseur selon l'une quelconque des revendications 1 à 3, **caractérisé en ce qu'**une canalisation externe (27) est rapportée sur ledit boîtier de sortie d'eau (10) pour accueillir au moins partiellement ledit troisième segment (16).

6. Véhicule comportant un groupe motopropulseur selon l'une quelconque des revendications précédentes.

7. Boîtier de sortie d'eau (10) pour groupe motopropulseur selon la revendication 1, comportant une première chambre (12) apte à collecter un fluide caloporteur chaud et une seconde chambre (13) apte à collecter un fluide caloporteur refroidi, ladite première chambre (12) comportant une entrée de première chambre (17) pour une admission de fluide caloporteur chaud en provenance d'un moteur thermique (7), une première sortie de première chambre (18) à raccorder à un second segment (15) de circuit caloporteur relié à un aérotherme (4) et une seconde sortie de première chambre (19) à raccorder à un quatrième segment (21) de circuit caloporteur pour relier ladite première chambre (12) à un radiateur (3), ladite seconde chambre (13) présentant une entrée de seconde chambre (23) à raccorder à un cinquième segment (22) de circuit caloporteur relié à un radiateur (3) et une sortie de seconde chambre (24) à raccorder à un sixième segment (26) de circuit caloporteur relié audit aérotherme (4) et/ou audit moteur thermique (7), la première sortie de première chambre (18) comportant un logement ménagé pour accueillir un clapet antiretour (30).

8. Boîtier de sortie d'eau (10) pour groupe motopropulseur selon la revendication 7, **caractérisé en ce que** ladite première chambre (12) comporte une seconde entrée de première chambre (28) et une seconde sortie de première chambre (29), un troisième segment (16) de circuit caloporteur traversant au moins partiellement ladite première chambre (12) entre ladite seconde entrée de première chambre (28) et ladite seconde sortie de première chambre (29), ladite seconde sortie de première chambre (29) étant reliée audit second segment (15) de circuit caloporteur en aval dudit clapet antiretour (30).

9. Boîtier de sortie d'eau (10) pour groupe motopropulseur selon la revendication 7, **caractérisé en ce qu'**il comporte une canalisation externe (27) pour accueillir au moins partiellement ledit troisième segment (16).

## Patentansprüche

1. Antriebsstrang (1) umfassend eine Wärmekraftmaschine (7), einen Wärmekraftmaschinen-Turbolader (8), eine Turboladerpumpe (9), ein Wasserauslassgehäuse (10), an das die Wärmekraftmaschine insbesondere angeschlossen ist (7), a Heizkörper (3) und eine Heizeinheit (4) mittels eines Wärmeübertragungskreislaufs (11), in dem eine Wärmeübertragungsflüssigkeit zirkuliert, wobei der Wärmeübertragungskreislauf (11) Folgendes umfasst: - einen ersten Abschnitt (14) des Wärmeübertragungskreislaufs, der
positioniert ist am Auslass der Wärmekraftmaschine (7), an der der Turbolader (8) montiert ist, und -
einem zweiten Segment (15) des Wärmeübertragungskreislaufs, der den Wasserauslasskasten (10) mit dem Lufterhitzer (4) verbindet, dadurc gekennzeichnet, dass der Wärmeübertragungskreislauf (11) ein drittes Segment (16) umfasst, auf dem die Turboladerpumpe (9) montiert ist, wobei das dritte Segment (16) einen dritten Segmenteinlass aufweist, der sich stromaufwärts davon am ersten Segment (14) befindet Turbolader (8) und einen Auslass des dritten Segments, der sich am zweiten Segment (15) befindet, um dem Lufterhitzer (4) Wärmeübertragungsflüssigkeit zuzuführen, wobei das erste Segment (14) mit dem dritten Segment (16) stromabwärts der Pumpe verbunden ist ( 9) und ein Rückschlagventil (30) ist am zweiten Segment (15) stromaufwärts des Auslasses des dritten Segments (16) vorgesehen.

2. Antriebsstrang nach Anspruch 1, **dadurch gekennzeichnet, dass** die im Wärmeübertragungskreislauf (11) zirkulierende Wärmeübertragungsflüssigkeit eine heiße Wärmeübertragungsflüssigkeit und eine gekühlte Wärmeübertragungsflüssigkeit umfasst; und dass das Wasserauslassgehäuse (10) eine erste Kammer (12), in der die heiße Wärmeübertragungsflüssigkeit gesammelt wird, und eine zweite Kammer (13), in der die gekühlte Wärmeübertragungsflüssigkeit gesammelt wird, umfasst, wobei die erste Kammer (12) aufweist einen ersten Kammereinlass (17) für den Einlass von heißer Wärmeübertragungsflüssigkeit, die von der Wärmekraftmaschine (7) kommt, einen ersten Auslass der ersten Kammer (18), mit dem das zweite Segment (15) verbunden ist, und einen zweiten Auslass der ersten Kammer (19), an die ein viertes Segment (21) des Wärmeübertragungskreislaufs angeschlossen ist, der die erste Kammer (12) mit dem Kühler (3) verbindet, wobei die zweite Kammer (13) einen zweiten Kammereinlass (23) aufweist, mit dem sie verbunden ist einen fünften Kreislaufabschnitt (22), der die zweite Kammer (13) mit dem Kühler (3) verbindet, und einen zweiten Kammerauslass (24), an den ein sechster Kreislaufabschnitt (26) angeschlossen ist, der die zweite Kammer (13) mit dem Lufterhitzer verbindet (4) und/oder Wärmekraftmaschinen-Audit (7).

3. Antriebsstrang nach Anspruch 2, **dadurch gekennzeichnet, dass** der erste Auslass der ersten Kammer (18) ein Gehäuse umfasst, das zur Aufnahme des Rückschlagventils (30) vorgesehen ist.

4. Antriebsstrang nach einem der Ansprüche 2 oder 3, **dadurch gekennzeichnet, dass** die erste Kammer (12) einen zweiten Einlass der ersten Kammer (28) und einen zweiten Auslass der ersten Kammer (29) umfasst, wobei das dritte Segment (16) ist ) eines Wärmeübertragungskreislaufs, der zumindest teilweise durch die erste Kammer (12) zwischen dem zweiten Einlass der ersten Kammer (28) und dem zweiten Auslass der ersten Kammer (29) verläuft, wobei der zweite Auslass der ersten Kammer (29) mit dieser verbunden ist zweites Segment (15) des Wärmeübertragungskreislaufs stromabwärts des Rückschlagventils (30).

5. Antriebsstrang nach einem der Ansprüche 1 bis 3, **dadurch gekennzeichnet, dass** an dem Wasserauslassgehäuse (10) ein Außenrohr (27) angebracht ist, um das dritte Segment (16) zumindest teilweise aufzunehmen.

6. Fahrzeug umfassend einen Antriebsstrang nach einem der vorhergehenden Ansprüche.

7. Wasserauslassgehäuse (10) für einen Antriebsstrang nach Anspruch 1, umfassend eine erste Kammer (12), die eine heiße Wärmeübertragungsflüssigkeit sammeln kann, und eine zweite Kammer (13), die eine gekühlte Wärmeübertragungsflüssigkeit sammeln kann, wobei die erste Kammer fähig ist (12) umfassend einen ersten Kammereinlass (17) für den Einlass von heißer Wärmeübertragungsflüssigkeit, die von einer Wärmekraftmaschine (7) kommt, und einen ersten Auslass der ersten Kammer (18), um mit einem zweiten Wärmesegment (15) verbunden zu werden Übertragungskreislauf, der mit einer Heizeinheit (4) verbunden ist, und ein zweiter Auslass der ersten Kammer (19), der mit einem vierten Segment (21) des Wärmeübertragungskreislaufs verbunden ist, um die erste Kammer (12) mit einem Heizkörper (3) zu verbinden. , wobei die zweite Kammer (13) einen zweiten Kammereinlass (23) zum Anschluss an ein fünftes Wärmeübertragungskreislaufsegment (22), das mit einem Kühler (3) verbunden ist, und einen zweiten Kammerauslass (24) zum Anschluss an einen sechsten Kreislauf aufweist Wärmeübertragungssegment (26), das mit dem Lufterhitzer (4) und/oder der Wärmekraftmaschine (7) verbunden ist, wobei der erste Auslass der ersten Kammer (18) ein Gehäuse umfasst angeordnet, um ein Rückschlagventil (30) aufzunehmen.

8. Wasserauslassgehäuse (10) für Antriebsstrang nach Anspruch 7, **dadurch gekennzeichnet, dass** die erste Kammer (12) einen zweiten Einlass der ersten Kammer (28) und einen zweiten Auslass der ersten Kammer (29) umfasst, wobei ein drittes Segment (16) des Wärmeübertragungskreislaufs zumindest teilweise durch die erste Kammer verläuft
(12) zwischen dem zweiten Einlass der ersten Kammer (28) und dem zweiten Auslass der ersten Kammer (29), wobei der zweite Auslass der ersten Kammer (29) mit dem zweiten Segment (15) des Wärmeübertragungskreislaufs stromabwärts von diesem verbunden ist - Rückschlagventil (30).

9. Wasserauslassgehäuse (10) für einen Antriebsstrang nach einem der Ansprüche 7, **dadurch gekennzeichnet, dass** es ein Außenrohr (27) umfasst, um zumindest teilweise das dritte Segment (16) aufzunehmen.

## Claims

1. Powertrain (1) comprising a heat engine (7), a heat engine turbocharger (8), a turbocharger pump (9), a water outlet housing (10) to which the heat engine is in particular connected ( 7), a radiator (3) and a unit heater (4) by means of a heat transfer circuit (11) in which a heat transfer fluid circulates, said heat transfer circuit (11) comprising: - a first segment (14) of heat transfer circuit positioned at the outlet of said heat engine (7) on which said turbocharger (8) is mounted, and -
a second segment (15) of heat transfer circuit, connecting the water outlet box (10) to said air heater (4),
**characterized in that** that said heat transfer circuit (11) comprises a third segment (16) on which said turbocharger pump (9) is mounted, said third segment (16) having a third segment inlet located on the first segment (14) upstream of the turbocharger (8) and a third segment outlet located on the second segment (15) to supply heat transfer fluid to said air heater (4), said first segment (14) being connected to the third segment (16) downstream of said pump (9) and a check valve (30) is provided on said second segment (15) upstream of said outlet of the third segment (16).

2. Powertrain according to claim 1, **characterized in that** the heat transfer fluid circulating in said heat transfer circuit (11) comprises a hot heat transfer fluid and a cooled heat transfer fluid; and **in that** the water outlet housing (10) comprises a first chamber (12) in which the hot heat transfer fluid is collected and a second chamber (13) in which the cooled heat transfer fluid is collected, said first chamber (12 ) having a first chamber inlet (17) for an admission of hot heat transfer fluid coming from the heat engine (7), a first outlet of the first chamber (18) to which said second segment (15) is connected and a second outlet of first chamber (19) to which is connected a fourth segment (21) of heat transfer circuit connecting said first chamber (12) to said radiator (3), said second chamber (13) having a second chamber inlet (23) to which is connected a fifth circuit segment (22) connecting said second chamber (13) to said radiator (3) and a second chamber outlet (24) to which is connected a sixth circuit segment (26) connecting said second chamber (13) to said air heater (4) and/or thermal engine audit (7).

3. Powertrain according to claim 2, **characterized in that** the first outlet of the first chamber (18) comprises a housing provided to accommodate said non-return valve (30).

4. Powertrain according to any one of claims 2 or 3, **characterized in that** said first chamber (12) comprises a second inlet of the first chamber (28) and a second outlet of the first chamber (29), said third segment ( 16) of heat transfer circuit passing at least partially through said first chamber (12) between said second inlet of first chamber (28) and said second outlet of first chamber (29), said second outlet of first chamber (29) being connected to said second segment (15) of the heat transfer circuit downstream of said non-return valve (30).

5. Powertrain according to any one of claims 1 to 3, **characterized in that** an external pipe (27) is attached to said water outlet housing (10) to at least partially accommodate said third segment (16) .

6. Vehicle comprising a powertrain according to any one of the preceding claims.

7. Water outlet housing (10) for a powertrain according to claim 1, comprising a first chamber (12) capable of collecting a hot heat transfer fluid and a second chamber (13) capable of collecting a cooled heat transfer fluid, said first chamber (12) comprising a first chamber inlet (17) for an admission of hot heat transfer fluid coming from a heat engine (7), a first outlet of the first chamber (18) to be connected to a second segment (15 ) of heat transfer circuit connected to a unit heater (4) and a second outlet of the first chamber (19) to be connected to a fourth segment (21) of the heat transfer circuit to connect said first chamber (12) to a radiator (3), said second chamber ( 13) having a second chamber inlet (23) to be connected to a fifth heat transfer circuit segment (22) connected to a radiator (3) and a second chamber outlet (24) to be connected to a sixth circuit segment (26) heat transfer connected to said air heater (4) and/or to said heat engine (7), the first outlet of the first chamber (18) comprising a housing arranged to accommodate a non-return valve (30).

8. Water outlet housing (10) for powertrain according to claim 7, **characterized in that** said first chamber (12) comprises a second inlet of the first chamber (28) and a second outlet of the first chamber (29), a third segment (16) of heat transfer circuit passing at least partially through said first chamber (12) between said second inlet of first chamber (28) and said second outlet of first chamber (29), said second outlet of first chamber (29) being connected to said second segment (15) of heat transfer circuit downstream of said non-return valve ( 30).

9. Water outlet housing (10) for a powertrain according to any one of claims 7, **characterized in that** it comprises an external pipe (27) to at least partially accommodate said third segment (16).
